**Europäisches Patentamt**

**European Patent Office**

**Office européen des brevets**

(11) Veröffentlichungsnummer: **0 272 510**

**A2**

## (12) EUROPÄISCHE PATENTANMELDUNG

(21) Anmeldenummer: 87117835.6

(22) Anmeldetag: 02.12.87

(51) Int. Cl.⁴ **H04B 7/08**

(30) Priorität: 18.12.86 DE 3643328

(43) Veröffentlichungstag der Anmeldung:
29.06.88 Patentblatt 88/26

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Ulmer, Wolfgang, Dipl.-Ing.**
**Grünstrasse 9**
**D-8000 München 70(DE)**

(54) **Raumdiversity-Einrichtung.**

(57) Bei Richtfunkstrecken werden RF-Kanäle, die auf benachbarten oder gleichen Frequenzen arbeiten, dadurch entkoppelt, daß die RF-Signale auf kreuzpolarisierten Wellen übertragen werden. Bei höheren Frequenzen erfolgt bei Regen neben erhöhter Funkfelddämpfung auch eine Reduzierung der Kreuzpolarisationsentkopplung, die eine erhöhte Nachbarkanal- oder Gleichkanalstörung im Nutzkanal bewirkt. Diese kann bei digitalen Richtfunksystemen erhöhte Bitfehlerquoten oder sogar den Ausfall des Systems zur Folge haben. Mit der neuen Einrichtung sollen Nachbarkanal-oder Gleichkanalstörungen im Nutzkanal reduziert werden.

Bei der neuen Raumdiversity-Einrichtung werden die Polarisationsrichtungen der Antennen für die beiden Empfangszweige gegenüber der auf maximale Kreuzpolarisationsentkopplung ausgerichteten Einstellung um einen jeweils gleichen, kleinen Winkel in positiver und negativer Richtung gegensinnig gedreht.

Digitale Richtfunksysteme

**FIG 2**

EP 0 272 510 A2

## Raumdiversity-Einrichtung

Die Erfindung bezieht sich auf eine Raumdiversity-Einrichtung bei der die von zwei Antennen empfangenen Nutzsignale der beiden Empfangszweige in einem Kombinator in der BB-oder ZF-Ebene zusammengeführt sind.

Bei Richtfunkstrecken werden RF-Kanäle, die auf benachbarten oder auf gleichen Frequenzen arbeiten, dadurch entkoppelt, daß die RF-Signale auf kreuzpolarisierten Wellen übertragen werden.

Die Kreuzpolarisationsentkopplung (XPD) der Signale auf einem realen Funkfeld liegt je nach Frequenz und Antennentyp in fadingfreier Zeit zwischen ca. 20 und 35 dB. Bei den höheren im Richtfunk benutzten Frequenzen (f > 5 GHz) erfolgt nun bei Regen sowohl eine erhöhte Funkfelddämpfung als auch eine Reduzierung der Kreuzpolarisationsentkopplung entsprechend der Regenintensität.

Die Reduzierung der Kreuzpolarisationsentkopplung bewirkt eine erhöhte Nachbarkanal-oder Gleichkanalstörung im Nutzkanal, die bei digitalen Richtfunksystemen erhöhte Bitfehlerquoten (BFQ) oder sogar den Ausfall des Systems zur Folge haben können. Für die Kreuzpolarisationsentkopplung gilt nach CCIR-Rep 338 näherungsweise die Formel:

$$XPD = 15 + 30 \lg f - 20 \lg A_R$$

wobei f die Radiofrequenz RF in GHz und $A_R$ die Regendämpfung in dB ist. Die Kreuzpolarisationsentkopplung XPD ist in dB angegeben.

Der Erfindung liegt die Aufgabe zugrunde, eine Lösung anzugeben, durch die Nachbarkanal-oder Gleichkanalstörungen im Nutzkanal in einfacher Weise reduziert werden können.

Diese Aufgabe wird gemäß der Erfindung in der Weise gelöst, daß bei einem Raumdiversity-Empfänger der eingangs beschriebenen Art die Polarisationsrichtungen der Antennen für die beiden Empfangszweige gegenüber der auf maximale Kreuzpolarisationsentkopplung ausgerichteten Einzeleinstellung um einen jeweils gleichen, kleinen Winkel $\alpha$ in positiver und negativer Richtung gegensinnig gedreht sind.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen

Fig. 1 in einer graphischen Darstellung die Kreuzpolarisationsentkopplung von Antennen als Funktion des Ausrichtungswinkels,

Fig. 2 ein Ausführungsbeispiel einer Raumdiversityeinrichtung mit Basisband-Kombinator und

Fig. 3 und 4 zwei Ausführungsbeispiele eines Raumdiversity-Empfängers mit ZF-Kombinator im Blockschaltbild.

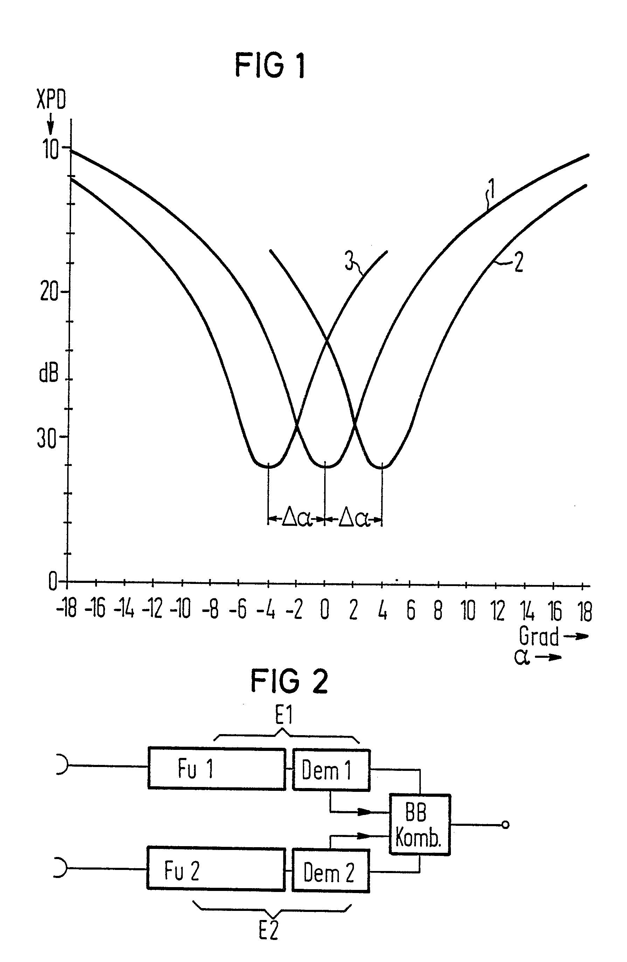

In Figur 1 zeigt Kurve 1 die Kreuzpolarisationsentkopplung XPD einer Antenne als Funktion des Einstellwinkels $\alpha$. Die Kurve verläuft bei Winkelabweichungen größer als ca. ± 2° entsprechend der Funktion XPD = 20 log |sin $\alpha$|. Im Winkelbereich zwischen +2° und -2° durchläuft die Kurve ein Maximum, das hier mit 32 dB angenommen wurde. Winkelbreite und Maximum können je nach Antennentyp und Frequenzlage unterschiedlich sein.

Die Kurven 2 und 3 zeigen die Kreuzpolarisationsentkopplung XPD von zwei Empfangsantennen, deren Polarisationsrichtung um +4° und -4° von der optimalen Einzeleinstellung abweicht. Es ergibt sich für beide Antennenanordnungen eine Entkopplung von 23 dB beim Winkel für 0° (Wert für fadingfreie Zeit). Dieser Wert und damit auch die dadurch gegebene Winkelabweichung vom Optimum sind so zu wählen, daß in fadingfreier Zeit ein genügend großer Signalgeräuschabstand gewährleistet ist. Bei digitalen Richtfunksystemen darf die Bitfehlerquote BFQ einen vorgegebenen Wert (z.B. 1 $\times$ 10$^{11}$) nicht überschreiten.

Aus Figur 1 ist zu erkennen, daß die Plus-Minus-Verdrehung der Antennen eine Verbreiterung der XPD-Kurve ergibt, da bei der erfindungsgemäßen Kombination der Signale immer nur die bessere Kurve wirksam ist. Bei einer Verdrehung der Polarisationsrichtung durch Regen durchläuft eine Antenne erst ihr Maximum der Kreuzpolarisationsentkopplung, während die andere sofort eine kleinere Kreuzpolarisationsentkopplung annimmt. Besteht die Raumdiversity-Einrichtung aus zwei Empfängern und einem vorteilhaft stoßfreien Umschalter, der von der Bitfehlerquote oder den daraus abgeleiteten Fehlerimpulsen der beiden Signale gesteuert wird, so wird nur der Empfänger auf den Ausgang geschaltet, der die kleinere Bitfehlerquote aufweist. Figur 2 zeigt eine Schaltung mit Verbesserung der XPD bei Gleich-und Nachbarkanalstörungen, mit jeweils einem aus einem Funkteil Fu 1 bzw. Fu 2 und einem nachfolgenden Demodulator Dem 1 bzw. Dem 2 bestehenden Empfänger E1, E2 in den beiden Empfangszweigen, die über einen BB-Kombinator zusammengeführt sind. Es wird ein bestimmter Ausfallgrenzwert, z.B. XPD = 14 dB erst bei einem um größeren Winkel erreicht, als ohne die erfindungsgemäße Maßnahme. Im Beispiel gelten folgende Werte: Für Kurve 1 ist XPD = 14 dB bei $\alpha$ = ± 10,5°, für Kurve 2 und 3 ist XPD = 14 dB bei $\alpha$ = ± 14.5°.

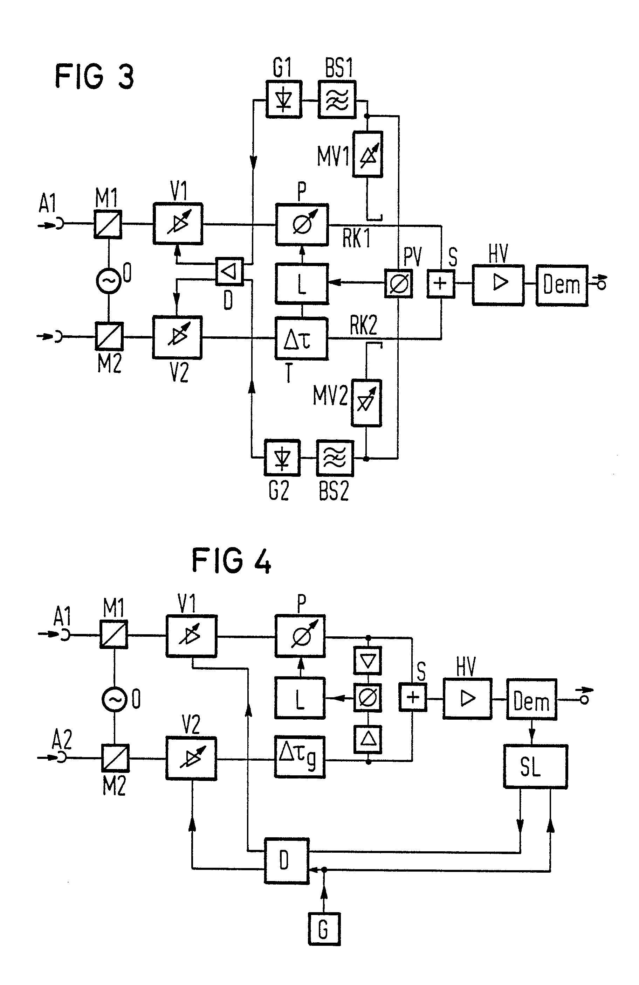

Figur 3 zeigt einen Raumdiversity-Empfänger mit ZF-Kombinator und Verbesserung der XPD bei Nachbarkanalstörungen. Mit dieser Anordnung läßt sich zusammen mit der entsprechenden Ausrichtung der Antennen der Störeinfluß von Nachbarkanälen reduzieren. Die Anschlußklemmen für die Antennen der beiden Empfangswege sind mit A1 und A2 bezeichnet. An ihnen tritt das Empfangssignal in der RF-Lage auf. Jeder Empfangszweig enthält einen Empfangsumsetzer M1 bzw. M2, die aus einem gemeinsamen Empfangsoszillator O gespeist werden, sowie einem nachfolgenden ZF-Vorverstärker V1 bzw. V2. In einem Empfangszweig ist ein elektronisch gesteuerter Phasenschieber P angeordnet, im anderen Empfangszweig ist ein Laufzeitglied T mit der Laufzeit $\Delta\tau$ eingeschaltet. Die beiden Empfangszweige werden über jeweils eine Abzweigschaltung RK1 bzw. RK2, an denen Signale aus den Empfangszweigen in eine Phasenvergleichsschaltung, bestehend aus zwei Meßverstärkern MV1 und MV2, einem Phasenvergleicher PV und einer nachfolgenden, mit dem Phasenschieber P verbundenen Logik L, ausgekoppelt werden, in einer Summierschaltung S zusammengeführt. An die Summierschaltung S sind ausgangsseitig ein ZF-Hauptverstärker HV und ein Demodulator Dem angeschlossen.

Die aus den Empfangszweigen über die Abzweigschaltungen RK1 und RK2 ausgekoppelten Signale werden zunächst auf einen Meßverstärker MV1 bzw. MV2 gegeben, deren Ausgangssignal einerseits der bereits genannten Phasenvergleichsschaltung zugeführt wird und andererseits auf eine Reihenschaltung aus jeweils einer Bandsperre BS1 bzw. BS2 und einem Gleichrichter G1 bzw. G2 gegeben wird, die mit den beiden Eingängen eines Differenzverstärkers D verbunden sind. Dieser ist ausgangsseitig an die ZF-Vorverstärker V1 und V2 angeschaltet.

Die vorstehend beschriebene Schaltung wirkt so, daß die Meßverstärker MV1 und MV2 das Nutzsignal auf einen konstanten Wert verstärken, der im Verstärker ausgeregelt wird. Die Bandsperren BS1 und BS2 unterdrücken das Nutzsignal und lassen das restliche Nachbarsignal durch, das in den nachfolgenden Gleichrichtern G1 bzw. G2 in einen Gleichspannungswert umgewandelt wird. Der Differenzverstärker D stellt den Unterschied der Nachbarkanalstörung fest und steuert die ZF-Vorverstärker V1 und V2 so, daß der Pfad mit dem stärkeren Nachbarkanalgeräusch entsprechend in der Verstärkung reduziert wird. Im Summierer S werden die Signale beider Pfade phasenrichtig addiert. Das stärker gestörte Signal hat dort eine entsprechend kleinere Amplitude als das schwächer gestörte Signal des anderen Pfades, so daß in der Summe ein optimaler Signal-Geräuschabstand erreicht wird.

Figur 4 zeigt eine Anordnung, mit der sich durch Depolarisation hervorgerufene Gleichkanalstörungen oder Nachbarkanalstörungen zusammen mit der entsprechenden Ausrichtung der Antennen reduzieren lassen. Der Raumdiversity-Empfänger mit ZF-Kombinator entspricht dabei in seinem Grundaufbau, also hinsichtlich der Empfangszweige und der Phasenvergleichsschaltung sowie der die Empfangszweige zusammenführenden Summierschaltung dem Raumdiversity-Empfänger nach Figur 3. Gleiche Elemente sind daher mit gleichen Bezugzeichen versehen. Die unterschiedliche Ausbildung besteht darin, daß anstelle der Bandsperren und Gleichrichter im Rückführungsweg der aus den Empfangszweigen ausgekoppelten Signale eine Regelschleife vom Demodulator Dem über eine Steuerlogik SL und einen Differenzverstärker D zu den ZF-Vorverstärkern V1 und V2 besteht. Dabei ist ferner ein NF-Generator G vorgesehen, der an einen Eingang der Steuerlogik SL und des Differenzverstärkers D angeschaltet ist und durch den die Verstärkung der ZF-Vorverstärker V1 und V2 gegensinnig kleinen Schwankungen unterworfen werden. der Demodulator Dem mißt die Bitfehlerquote BFQ und gibt die Daten an die Steuerlogik SL. Diese steuert nun über den Differenzverstärker D die Verstärkung der ZF-Vorverstärker V1 und V2 so, daß die Bitfehlerquote ein Minimum erreicht. Da es sich bei den Depolarisationserscheinungen durch Regen um relativ langsame Vorgänge handelt, läßt sich die Steuerlogik mit kleinem Aufwand realisieren.

## Ansprüche

1. Raumdiversity-Einrichtung, bei dem die von zwei Antennen empfangenen Nutzsignale der beiden Empfangszweige in einem Kombinator in der BB-oder ZF-Ebene zusammengeführt sind **dadurch gekennzeichnet,** daß die Polarisationsrichtungen der Antennen für die beiden Empfangszweige gegenüber der auf maximale Kreuzpolarisationsentkopplung ausgerichteten Einstellung um einen jeweils gleichen, kleinen Winkel in positiver und negativer Richtung gegensinnig gedreht sind.

2. Raumdiversity-Einrichtung nach Anspruch 1, **dadurch gekennzeichnet,** daß die Größe des Winkels $\alpha$ für die Abweichung der Polarisationsrichtung von der optimalen Einzeleinstellung der Empfangsantennen gerade so groß ist, daß in fadingfreier Zeit gerade noch eine fehlerfreie Signalübertragung gewährleistet ist.

3. Raumdiversity-Einrichtung nach Anspruch 1 oder 2, **gekennzeichnet durch** einen Empfänger, bei dem in einem Empfangszweig ein elektronisch gesteuerter Phasenschieber eingefügt ist und auf der Ausgangsseite des Phasenschiebers zwischen den beiden Empfangszweigen eine den Phasenschieber steuernde Phasenvergleichsschaltung mit vorgeschalteten ZF-Verstärkern angeordnet ist, und bei dem die aus den beiden Empfangszweigen ausgekoppelten Signalanteile zugleich über jeweils eine auf ein restliches Nachbarsignal abgestimmte Bandsperre auf einen Gleichrichter gegeben werden, deren Ausgang mit den Eingängen eines Differenzverstärkers verbunden ist, der den Unterschied der Nachbarkanalstörung ermittelt und die ZF-Verstärker in den Empfangszweigen derart steuert, daß der Zweig mit dem stärkeren Nachbarkanalgeräusch entsprechend in der Verstärkung reduziert wird.

4. Raumdiversity-Einrichtung nach Anspruch 1 oder 2, **gekennzeichnet durch** einen Empfänger, bei dem in einem Empfangszweig ein elektronisch gesteuerter Phasenschieber eingefügt ist und auf der Ausgangsseite des Phasenschiebers zwischen den beiden Empfangszweigen eine den Phasenschieber steuernde Phasenvergleichsschaltung mit vorgeschalteten ZF-Verstärkern angeordnet ist, und bei dem ein NF-Generator vorgesehen ist, der über einen Differenzverstärker an die in den Empfangszweigen liegenden ZF-Verstärker angeschaltet ist, und eine an den Demodulator des Empfängers angeschaltete und mit dem NF-Generator verbundene Steuerlogik, die aus der vom Demodulator gemessenen Bitfehlerquote über den Differenzverstärker die Verstärkung der ZF-Verstärker so regelt, daß die Bitfehlerquote ein Minimum erreicht.

# FIG 1

# FIG 2

FIG 3

FIG 4